# EUROPEAN PATENT APPLICATION

(11) **EP 3 677 718 A1**
(43) Date of publication of application: **08.07.2020**
(21) Application number: 18851585.2
(22) Date of filing: 31.08.2018
(51) Int. Cl.: D06F 39/12, D06F 39/00, F16M 7/00, F16F 15/023

(54) **SUPPORTING AND LEVELING DEVICE FOR HOUSEHOLD APPLIANCE AND HOUSEHOLD APPLIANCE**

(30) Priority: 01.09.2017 CN 201710781019
(71) Applicant: Qingdao Haier Washing Machine Co., Ltd., Qingdao, Shandong 266101 (CN); Qingdao Haier Smart Technology R&D Co., Ltd., Shandong 266101 (CN)
(72) Inventor: ZHAO, Zhiqiang, Qingdao Shandong 266101 (CN); LV, Peishi, Qingdao Shandong 266101 (CN); XU, Sheng, Qingdao Shandong 266101 (CN)
(74) Representative: Beck & Rössig European Patent Attorneys
(86) International application number: PCT/CN2018/103456
(87) International publication number: WO 2019/042394

(57) **Abstract**

A supporting and leveling device for a household appliance and a household appliance are provided, wherein the supporting and leveling device is provided with leveling bottom legs. Each of the leveling bottom legs includes a hydraulic connection piece (100), a connection sleeve (300), a flexible deformation membrane (400), an adjustment leg (500), and a hydraulic medium (200). An edge of the flexible deformation membrane (400) is hermetically mounted at a joint of the hydraulic connection piece (100) and the connection sleeve (300) to form an accommodating chamber together with the hydraulic connection piece (100). The hydraulic medium (200) is arranged in the accommodating chamber. When the leveling bottom leg is arranged on an uneven supporting surface, the adjustment leg (500) axially moves along the connection sleeve (300) to squeeze the flexible deformation membrane (400) to deform, so as to change a volume of the accommodating chamber, and the hydraulic medium is stressed to act on the adjustment leg (500) for leveling.

## Description

### TECHNICAL FIELD

The present disclosure relates to the technical field of supporting and leveling of household appliances, and particularly relates to a supporting and leveling device for a household appliance and a household appliance.

### BACKGROUND

Household appliances are generally provided with leveling devices at bottoms of housings. When a household appliance is arranged, the leveling device can be adjusted to make the household appliance reach a stable arrangement state. After the household appliance is leveled and arranged, the leveling device can support the household appliance and keep the household appliance stable.

By taking a washing machine as an example, an existing washing machine is generally provided with bolt bottom legs on the bottom of a housing or the whole machine. Each of the bolt bottom legs includes a screw, a nut washer and a rubber pad. The nut washer can spirally move up and down on the screw, and the screw can also spirally move up and down in a screw hole of a bottom plate of the housing. A height of the washing machine can be adjusted according to a length of the screw screwed into the screw hole of the bottom plate, of the bolt bottom leg. Anticlockwise rotation of most of the bottom legs is for heightening the washing machine, and clockwise rotation of most of the bottom legs is for lowering the washing machine. After the height of the bolt bottom leg is adjusted, the nut washer for preventing looseness is tightened to keep stability.

Although the bottom legs of the above washing machine realize the leveling of the washing machine, a user needs to adjust the bottom legs manually. If the washing machine has a large self-weight or an installation space is narrow, user operation is inconvenient. In addition, vibrations of the washing machine during long-term work process also have an effect on the leveling of the bottom legs to easily lead to a supporting failure, causing uneven placement of the washing machine.

For example, an existing 8KG drum washing machine, generally about 80Kg, is relatively heavy, so that it is extremely inconvenient to adjust. The washing machine cannot be ensured to be adjusted to an optimal state even if the washing machine is adjusted. During washing, especially during spin-dewatering from 0 r/min to about 1,400 r/min, once the washing machine is not leveled or has a problem of weak leg, great vibration will be caused, so as to greatly affect the use comfort of a customer.

In addition, the vibration caused by the unevenness of the washing machine may loosen the screws of the bottom legs to cause bottom leg brackets to move vertically, and this instability may change a horizontal state of the washing machine, resulting in more intense vibration. Due to the vicious cycle, if the washing machine is used for a long time, noise will be louder and louder, and the washing machine body will be damaged in a certain degree as well, so that the service life of the washing machine is shortened.

Therefore, the leveling of the existing washing machine has the problems of manual adjustment, time wasting, labor wasting and lower precision.

In view of this, the present disclosure is specifically disclosed.

### SUMMARY

In order to solve the above problems, a first invention objective of the present disclosure is to provide a supporting and leveling device for a household appliance, and specifically, adopts the following technical solution:
A supporting and leveling device for a household appliance includes leveling bottom legs, and each of the leveling bottom leg includes:
a hydraulic connection piece;
a connection sleeve, fixedly connected with the hydraulic connection piece;
a flexible deformation membrane, wherein an edge of the flexible deformation membrane is hermetically mounted at a joint of the hydraulic connection piece and the connection sleeve to form an accommodating chamber together with the hydraulic connection piece;
an adjustment leg, arranged in the connection sleeve and capable of axially moving relative to the connection sleeve; and
a hydraulic medium, arranged in the accommodating chamber.

When the leveling bottom leg is arranged on an uneven supporting surface, the adjustment leg axially moves along the connection sleeve to squeeze the flexible deformation membrane to deform, so as to change a volume of the accommodating chamber between the flexible deformation membrane and the hydraulic connection piece, and the hydraulic medium is stressed to act on the adjustment leg for leveling.

Further, the hydraulic connection piece is provided with an open accommodating cavity. The connection sleeve is fixedly mounted at an opening of the accommodating cavity of the hydraulic connection piece. The edge of the flexible deformation membrane is hermetically mounted at the joint of the hydraulic connection piece and the connection sleeve to form the accommodating chamber together with the accommodating cavity.

Further, the flexible deformation membrane includes an integrally formed membrane body portion and a hermetical connection portion. The hermetical connection portion is located at a whole circumferential edge of the membrane body portion. The shape of the hermetical connection portion is the same as the shape of the opening of the accommodating cavity of the hydraulic connection piece and the shape of a structure of the portion, connected with the hydraulic connection piece, on the connection sleeve. The hermetical connection portion is hermetically mounted at the joint of the hydraulic connection piece and the connection sleeve to form an annular seal in a whole circumferential direction.

Preferably, the opening of the accommodating cavity is a circular opening. The portion, connected with the hydraulic connection piece, on the connection sleeve is of an annular connection structure, and the hermetical connection portion is of a circular ring shape.

Further, the membrane body portion is a planar membrane sheet, or a membrane sheet having expansible ripples, or a membrane sheet having a groove.

Further, the position, connected with the connection sleeve, on the hydraulic connection piece, and/or the position, connected with the hydraulic connection piece, on the connection sleeve are/is provided with an annular groove. The edge of the flexible deformation membrane is squeezed and sealed in the annular groove by the hydraulic connection piece and the connection sleeve to realize hermetical installation.

Further, the connection sleeve is of an annular structure which is matched with the opening of the accommodating cavity of the hydraulic connection piece. The adjustment leg is arranged inside an inner ring of the annular structure in an axial motion manner. A blocking structure for preventing one end of the adjustment leg from being separated is arranged on the inner ring of the annular structure.

Further, one end of the adjustment leg is mounted in the connection sleeve in a limited manner, and the other end of the adjustment leg extends out to contact the supporting surface. A limiting sliding slot is formed in a circumferential wall of the inner ring of the connection sleeve. A limiting sliding block is arranged on the adjustment leg. The limiting sliding block is mounted in the limiting sliding slot in an up-and-down sliding manner. The blocking structure is arranged at a bottom of the limiting sliding slot to block the bottom of the limiting sliding slot.

Further, an end face of one end, in contact with the flexible deformation membrane, of the adjustment leg is a flat end face.

Preferably, the adjustment leg is a solid columnar body, and an upper end face of the solid columnar body is a flat end face.

Further, a throttling flow channel communicating with the accommodating chamber is arranged inside the hydraulic connection piece, and the hydraulic connection piece includes a hydraulic nozzle communicating with the throttling flow channel.

At least two leveling bottom legs are connected to the hydraulic nozzle through a hydraulic pipe to realize flowing of the hydraulic medium between the leveling bottom legs for leveling.

A second invention objective of the present disclosure is to provide a household application having any above-mentioned supporting and leveling device for a household appliance.

In the supporting and leveling device for the household appliance of the present disclosure, according to a hydraulic principle, each of the leveling bottom legs is automatically and adaptively adjusted by the flowability of the hydraulic medium due to different pressures caused by unevenness, until the bottom leg for the household appliance is balanced, and the hydraulic medium stops flowing to realize automatic leveling.

According to the leveling bottom leg of the present disclosure, the flexible deformation membrane is hermetically installed to form the accommodating chamber together with the hydraulic connection piece, and the hydraulic medium is arranged inside the accommodating chamber and cannot leak easily, the flexible deformation membrane may further deform under the pressure of unevenness to squeeze the hydraulic medium in the accommodating chamber, and the hydraulic medium is compressed/expands to act on the adjustment leg until the adjustment leg is leveled and stabilized. Therefore, the leveling bottom leg of the present disclosure uses the flexible deformation membrane to seal the hydraulic medium, so that the supporting and leveling device is simple in structure, low in cost, and high in reliability.

### BRIEF DESCRIPTION OF THE DRAWINGS

Fig. 1 is a sectional view of a leveling bottom leg of an embodiment of the present disclosure (an undeformed state of a flexible deformation membrane); and
Fig. 2 is a sectional view of a leveling bottom leg of an embodiment of the present disclosure (a deformed state of a flexible deformation membrane).

### DETAILED DESCRIPTION

A household supporting and leveling device and a household appliance of the present disclosure are described in detail below in combination with the accompanying drawings.

### Embodiment I

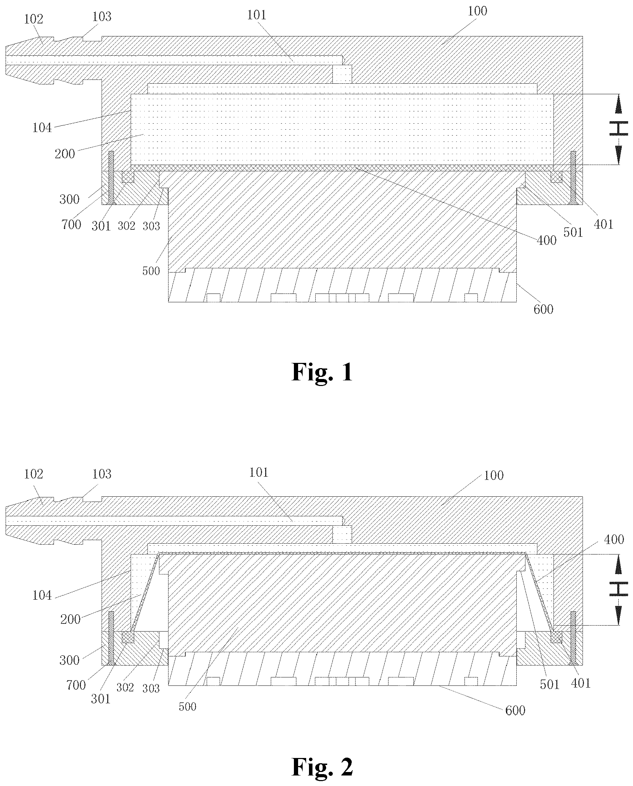

As shown in Fig. 1 and Fig. 2, a supporting and leveling device for a household appliance, which is provided by the present embodiment, includes leveling bottom legs. Each of the leveling bottom legs includes:
a hydraulic connection piece 100;
a connection sleeve 300, fixedly connected with the hydraulic connection piece 100;
a flexible deformation membrane 400, wherein an edge of the flexible deformation membrane 400 is hermetically mounted at a joint of the hydraulic connection piece 100 and the connection sleeve 300 to form an accommodating chamber together with the hydraulic connection piece 100;
an adjustment leg 500, arranged in the connection sleeve 300 and capable of axially moving relative to the connection sleeve 300; and
a hydraulic medium 200, arranged in the accommodating chamber.

When the leveling bottom leg is arranged on an uneven supporting surface, the adjustment leg 500 axially moves along the connection sleeve 300 to squeeze the flexible deformation membrane 400 to deform, so as to change a volume of the accommodating chamber between the flexible deformation membrane 400 and the hydraulic connection piece 100, and the hydraulic medium 200 is stressed to act on the adjustment leg 500 for leveling.

For the leveling bottom leg of the present embodiment, according to a hydraulic principle, the adjustment leg 500 is automatically and adaptively adjusted by the flowability of the hydraulic medium 200 due to different pressures caused by unevenness, until the leveling bottom leg is balanced, and the hydraulic medium 200 stops flowing to realize automatic leveling.

In the present embodiment, the flexible deformation membrane 400 is hermetically installed to form the accommodating chamber together with the hydraulic connection piece 100, and the hydraulic medium 200 is arranged inside the accommodating chamber and cannot leak easily. The flexible deformation membrane 400 can further deform under the pressure of unevenness to squeeze the hydraulic medium 200 in the accommodating chamber, and the hydraulic medium 200 is compressed/expands to act on the adjustment leg 500 until the adjustment leg is leveled and stabilized. Therefore, the present embodiment uses the flexible deformation membrane 400 to seal the hydraulic medium 200, so that the supporting and leveling device is simple in structure, low in cost, and high in reliability.

Further, in the present embodiment, the hydraulic connection piece 100 is provided with an open accommodating cavity 104. The connection sleeve 300 is fixedly mounted at an opening of the accommodating cavity 104 of the hydraulic connection piece 100. The edge of the flexible deformation membrane 400 is hermetically mounted at the joint of the hydraulic connection piece 100 and the connection sleeve 300 to form the accommodating chamber together with the accommodating cavity 104.

In the present embodiment, the accommodating cavity 104 is arranged in the hydraulic connection piece, so that after the flexible deformation membrane 400 is mounted, the accommodating chamber with a larger volume can be formed, so as to ensure that there is sufficient hydraulic medium 200 in the leveling bottom leg, and the sufficient hydraulic medium 200 is a key to level the leveling bottom leg. In addition, only the hermetical installation problem needs to be considered for the flexible deformation membrane 400, and no accommodating cavity structure needs to be designed, so that the flexible deformation membrane 400 can be designed to be of a simple sheet-like structure, thereby simplifying the structure and installation of the flexible deformation membrane 400 and reducing the cost.

As an implementation mode of the present embodiment, the flexible deformation membrane 400 includes an integrally formed membrane body portion and a hermetical connection portion 401. The hermetical connection portion 401 is located at a whole circumferential edge of the membrane body portion. The shape of the hermetical connection portion 401 is the same as the shape of the opening of the accommodating cavity 104 of the hydraulic connection piece 100 and the shape of a structure of the portion, connected with the hydraulic connection piece 100, on the connection sleeve 300. The hermetical connection portion 401 is hermetically mounted at the joint of the hydraulic connection piece 100 and the connection sleeve 300 to form an annular seal in the whole circumferential direction. Thorough sealing of the accommodating chamber may be realized only by hermetically mounting the flexible deformation membrane 400 in the whole circumferential direction, so that the hydraulic medium 200 is not leak, and a leveling effect is guaranteed.

Preferably, the opening of the accommodating cavity 104 is a circular opening. The portion, connected with the hydraulic connection piece 100, on the connection sleeve 300 is of an annular connection structure, and the hermetical connection portion is of a circular ring shape.

In the present embodiment, the membrane body portion is a planar membrane sheet, which is simple in structure and lower in cost. Or, the membrane body portion is a membrane sheet having expansible ripples, which is higher in expansibility, and may better squeeze or recover the hydraulic medium. Or, the membrane body portion is a membrane sheet having a groove. The groove communicates with the accommodating cavity 104 of the hydraulic connection piece 100 to enlarge the volume of the accommodating chamber.

In the present embodiment, the flexible deformation membrane 400 is deformable and is made of a material such as rubber, silica gel, and polyurethane. The flexible deformation membrane 400 is completely protected by the adjustment leg 500, the connection sleeve 300, and the hydraulic connection piece 100, and since the deformation quantity of the flexible deformation membrane 400 is restrained and protected, the breakage of the flexible deformation membrane 400 and the damage to the flexible deformation membrane 400 are prevented.

In order to realize the hermetical installation of the flexible deformation membrane 400, the position, connected with the connection sleeve 300, on the hydraulic connection piece 100, and/or the position, connected with the hydraulic connection piece 100, on the connection sleeve 300 are/is provided with an annular groove. The edge of the flexible deformation membrane 400 is squeezed and sealed in the annular groove by the hydraulic connection piece 100 and the connection sleeve 300 to realize hermetical installation. The flexible deformation membrane 400 is squeezed to deform, and the edge of the flexible deformation membrane 400 is in tight fit with the annular groove to form a sealing surface, so as to ensure hermetical connection.

Further, in the present embodiment, the structure of the connection sleeve 300 is simplified according to the effect of the connection sleeve 300. The connection sleeve 300 is of an annular structure which is matched with the opening of the accommodating cavity 104 of the hydraulic connection piece 100. The adjustment leg 500 is arranged inside an inner ring of the annular structure in an axial motion manner. A blocking structure 303 for preventing one end of the adjustment leg from being separated is arranged on the inner ring of the annular structure.

The leveling bottom leg of the present embodiment automatically levels the household appliance by a hydraulic principle, being simple and reliable. Since the adjustment leg 500 is arranged in the connection sleeve 300 in a relative axial movement manner, but the household appliance is only adjusted up and down, the rotation of the adjustment leg 500 relative to the connection sleeve 300 needs to be limited in order to guarantee the stability of leveling. Therefore, in the present embodiment, one end of the adjustment leg 500 is mounted in the connection sleeve 300 in a limited manner, and the other end of the adjustment leg 500 extends out to contact a supporting surface. A limiting sliding slot 302 is formed in the circumferential wall of the inner ring of the connection sleeve 300. A limiting sliding block 501 is arranged on the adjustment leg 500, and the limiting sliding block 501 is mounted in the limiting sliding slot 302 in an up-and-down sliding manner. The blocking structure 303 is arranged at the bottom of the limiting sliding slot 302 to block the bottom of the limiting sliding slot 302.

In the present embodiment, a plurality of limiting sliding slots 302 are arranged in the circumferential direction of the circumferential wall of the inner ring of the connection sleeve 300. The limiting sliding blocks 501 are arranged on the peripheral wall of the adjustment leg 500 and are in one-to-one corresponding to the limiting sliding slots 302.

As a preferred implementation mode of the present embodiment, the end face of one end, in contact with the flexible deformation membrane 400, of the adjustment leg 500 is a flat end face, thereby avoiding squeezing damage caused when the adjustment leg 500 squeezes the flexible deformation membrane 400 and ensuring the service life of the flexible deformation membrane 400.

Preferably, the adjustment leg 500 is a solid columnar body, and an upper end face of the solid columnar body is a flat end face.

In the present embodiment, a throttling flow channel 101 communicating with the accommodating chamber is arranged inside the hydraulic connection piece 100, and specifically, the throttling flow channel 101 communicates with the accommodating cavity of the hydraulic connection piece 100. The hydraulic connection piece 100 includes a hydraulic nozzle 102 communicating with the throttling flow channel 101. At least two leveling bottom legs are connected to the hydraulic nozzle 102 through a hydraulic pipe to realize flowing of the hydraulic medium between the leveling bottom legs for leveling.

The throttling flow channel 101 is arranged inside the hydraulic connection piece of the leveling bottom leg of the present embodiment, thereby avoiding quick flowing of the hydraulic medium and making the adjustment process steadier. In addition, in a case that pressure on the bottom leg for the household appliance changes a lot, the throttling flow channel 101 can well buffer the pressure to avoid damaging the bottom leg for the household appliance caused by the sudden quick flowing of the hydraulic medium.

The leveling bottom legs of the present embodiment communicate with each other through the hydraulic pipe, so that the hydraulic medium flows between the leveling bottom legs to realize automatic leveling.

Anti-separation barbs 103 for preventing the hydraulic pipe from being separated are arranged on the hydraulic nozzle 102 of the present embodiment.

In the present embodiment, the hydraulic connection piece 100 includes a plate-like body. The throttling flow channel 101 is arranged in the plate-like body, and the hydraulic nozzle 102 is integrally formed on the plate-like body. One side of the plate-like body is fixedly connected with the annular structure, the accommodating cavity is formed by encircling of the annular structure and the plate-like body, and the annular structure and the plate-like body are integrally formed.

In the present embodiment, the leveling bottom leg further includes a damping gasket 600 fixed at the bottom of the adjustment leg 500. A bottom of the damping gasket 600 has designed lines, so as to increase friction force on the ground and improve the stability. The damping gasket is made of a rubber material, such as butadiene-acrylonitrile rubber, and can also be made of a polyurethane material. The damping gasket and the adjustment leg are fastened to be arranged integrally. There are various fastening connection processes, for example, fastening slots are designed for the damping gasket and the adjustment leg for fastening, glue is smeared between the damping gasket and the adjustment leg for adhesion, the damping gasket is subjected to in-mold injection molding on the adjustment leg, and furthermore, the adjustment leg is coated with polyurethane. A surface, in contact with the ground, of the damping gasket is preferably of a striped structure to increase the friction force on the ground.

In the present embodiment, the connection sleeve 300 and the hydraulic connection piece 100 are fastened, and according to the figure, the connection sleeve 300 and the hydraulic connection piece 100 are fastened through screws 700, or, are connected in various connection modes, such as fixed connection through clamping slots and clamping jaws, adhesion with glue, fixed connection through screws and bolts, hot melt connection and ultrasonic welding.

In the present embodiment, N fixing holes (N is more than or equal to 1, not shown in the figure) are formed in the hydraulic connection piece of the leveling bottom leg, so that the bottom leg is fastened onto a bottom plate of the household appliance.

In the present embodiment, the hydraulic medium 200 is preferably hydraulic oil.

As shown in Fig. 1, when the leveling bottom leg is filled with the hydraulic medium, the adjustment leg extends out completely, and the flexible deformation membrane 400 does not deform.

As shown in Fig. 2, once the leveling bottom leg is stressed by a higher unbalanced force, the adjustment leg is slowly pressed to squeeze the internal hydraulic medium to a maximum motion range, and at the moment, the flexible deformation membrane 400 deforms.

In the present embodiment, the supporting and leveling device for the household appliance includes two leveling bottom legs that communicate with each other. The two leveling bottom legs of the supporting and leveling device for the household appliance of the present embodiment are mounted at two corners of one side of the bottom of the household appliance, and two ordinary bottom leg supports are mounted on the other side of the bottom of the household appliance.

Or, in the present embodiment, the supporting and leveling device for the household appliance includes four leveling bottom legs that communicate with each other two by two or communicate with one another. The four leveling bottom legs of the supporting and leveling device for the household appliance of the present embodiment are mounted at four corners of the bottom of the household appliance.

The present embodiment provides the leveling bottom leg which is simple in design and structure, small in size, convenient and easy to produce, and high in reliability, and can effectively realize the leveling of the household appliance.

### Embodiment II

The present embodiment provides a household appliance having the supporting and leveling device for the household appliance in the above-mentioned embodiment. The household appliance includes a housing, a plurality of leveling bottom legs is mounted at the bottom of the housing. A hydraulic medium filling the leveling bottom legs flows between the leveling bottom legs for leveling.

Preferably, at least two leveling bottom legs communicate with each other through a hydraulic pipe to realize flowing of the liquid medium between the leveling bottom legs.

The embodiment of the present disclosure takes a washing machine as an example to describe the principle and method for automatically leveling the washing machine by the leveling bottom legs. After the washing machine is mounted, since the ground is uneven, different leveling bottom legs have different heights, and the leveling bottom legs located at pits on the ground are at low positions. Therefore, it can be known that the leveling bottom legs at high positions firstly bear the weight of the washing machine, and if the leveling bottom legs at high positions bear a lot of the weight, the leveling bottom legs at low positions are weak legs or bear a little of the weight.

Adjustment legs of the leveling bottom legs at high positions will move up under a high pressure, and the heights of the entire bottom legs are reduced, so that the volume of a hollow cavity of a flexible accommodating body filled with the hydraulic medium is compressed to be reduced, so as to force the hydraulic medium to enter an orifice or a valve hole and enter the leveling bottom legs at low positions through a high-pressure pipe, and more and more hydraulic medium enters the flexible accommodating body of the leveling bottom legs at the low positions to make the flexible accommodating body swell to push the adjustment legs to extend.

When the bottom legs at high positions and the bottom legs at low positions have the same hydraulic pressure, the hydraulic medium no longer flows by the high-pressure pipe, and a relative position between each of the adjustment legs and a bottom plate of the washing machine no longer changes, thereby completing automatic adjustment of the washing machine.

During washing or spin-drying of the washing machine, since the hydraulic medium may also flow slowly for self-leveling, the vibration noise of the washing machine is greatly lowered.

In the present embodiment, the hydraulic medium may be hydraulic oil which has good fluidity and stable composition.

In addition, the leveling bottom leg according to the above embodiment of the present disclosure may also be applied to household appliances such as a refrigerator, a freezer and an air conditioner indoor unit in addition to the washing machine.

The above descriptions are only the preferred embodiments of the present disclosure, but not intended to limit the present disclosure in any forms. Although the present disclosure is disclosed above by the preferred embodiments, the preferred embodiments are not intended to limit the present disclosure. Those skilled in the art can make some changes by using the above-mentioned technical contents or modify the technical contents as equivalent embodiments of equivalent changes without departing from the scope of the technical solution of the present disclosure. Any simple alterations, equivalent changes and modifications that are made to the above embodiments according to the technical essence of the present disclosure without departing from the contents of the technical solution of the present disclosure shall all fall within the scope of the solution of the present disclosure.

## Claims

1. A supporting and leveling device for a household appliance comprising a leveling bottom leg, **characterized in that** the leveling bottom leg comprises:
a hydraulic connection piece;
a connection sleeve, fixedly connected with the hydraulic connection piece;
a flexible deformation membrane, wherein an edge of the flexible deformation membrane is hermetically mounted at a joint of the hydraulic connection piece and the connection sleeve to form an accommodating chamber together with the hydraulic connection piece;
an adjustment leg, arranged in the connection sleeve and capable of axially moving relative to the connection sleeve; and
a hydraulic medium, arranged in the accommodating chamber,
when the leveling bottom leg is arranged on an uneven supporting surface, the adjustment leg axially moves along the connection sleeve to squeeze the flexible deformation membrane to deform, and to change a volume of the accommodating chamber between the flexible deformation membrane and the hydraulic connection piece, and the hydraulic medium is stressed to act on the adjustment leg for leveling.

2. The supporting and leveling device for the household appliance according to claim 1, **characterized in that** the hydraulic connection piece is provided with an accommodating cavity with an opening; the connection sleeve is fixedly mounted at the opening of the accommodating cavity of the hydraulic connection piece; and the edge of the flexible deformation membrane is hermetically mounted at the joint of the hydraulic connection piece and the connection sleeve to form the accommodating chamber together with the accommodating cavity.

3. The supporting and leveling device for the household appliance according to claim 2, **characterized in that** the flexible deformation membrane comprises an membrane body portion and a hermetical connection portion integrally formed;
the hermetical connection portion is located at a whole circumferential edge of the membrane body portion; a shape of the hermetical connection portion is the same as a shape of the opening of the accommodating cavity of the hydraulic connection piece and a shape of a structure of a portion, connected with the hydraulic connection piece, on the connection sleeve;
the hermetical connection portion is hermetically mounted at the joint of the hydraulic connection piece and the connection sleeve to form an annular seal in a whole circumferential direction;
preferably, the opening of the accommodating cavity is a circular opening; a position, connected with the hydraulic connection piece, on the connection sleeve is of an annular connection structure; and the hermetical connection portion is of a circular ring shape.

4. The supporting and leveling device for the household appliance according to claim 3, **characterized in that** the membrane body portion is a planar membrane sheet, or a membrane sheet having expansible ripples, or a membrane sheet provided with a groove.

5. The supporting and leveling device for the household appliance according to any one of claims 1-4, **characterized in that** a position, connected with the connection sleeve, on the hydraulic connection piece, and/or a position, connected with the hydraulic connection piece, on the connection sleeve are/is provided with an annular groove; and the edge of the flexible deformation membrane is squeezed and sealed in the annular groove by the hydraulic connection piece and the connection sleeve to realize hermetical installation.

6. The supporting and leveling device for the household appliance according to claim 2, **characterized in that** the connection sleeve is of an annular structure which is matched with the opening of the accommodating cavity of the hydraulic connection piece;
the adjustment leg is arranged inside an inner ring of the annular structure and moves axially; and a blocking structure for preventing one end of the adjustment leg from being separated is arranged on the inner ring of the annular structure.

7. The supporting and leveling device for the household appliance according to claim 6, **characterized in that** the one end of the adjustment leg is mounted in the connection sleeve in a limited manner, and another end of the adjustment leg extends out to contact a supporting surface;
a limiting sliding slot is formed in a circumferential wall of the inner ring of the connection sleeve; a limiting sliding block is arranged on the adjustment leg;
the limiting sliding block is mounted in the limiting sliding slot and the limiting sliding block is movable up-and-down in the limiting sliding slot; and the blocking structure is arranged at a bottom of the limiting sliding slot to block the bottom of the limiting sliding slot.

8. The supporting and leveling device for the household appliance according to claim 1, **characterized in that** an end face of one end, in contact with the flexible deformation membrane, of the adjustment leg is a flat end face;
preferably, the adjustment leg is a solid columnar body, and an upper end face of the solid columnar body is a flat end face.

9. The supporting and leveling device for the household appliance according to claim 1, **characterized in that** a throttling flow channel communicating with the accommodating chamber is arranged inside the hydraulic connection piece, and the hydraulic connection piece comprises a hydraulic nozzle communicating with the throttling flow channel; and
hydraulic nozzles of at least two leveling bottom legs are connected with each other through a hydraulic pipe to realize flowing of the hydraulic medium between the leveling bottom legs for leveling.

10. A household appliance having the supporting and leveling device for the household appliance according to any one of claims 1-9.
